# EUROPEAN PATENT APPLICATION

(11) **EP 3 878 300 A1**
(43) Date of publication of application: **15.09.2021**
(21) Application number: 20162521.7
(22) Date of filing: 11.03.2020
(51) Int. Cl.: A42B 3/00, B62J 11/24, B62H 5/20

(54) **STORAGE DEVICE FOR A FOLDABLE PROTECTIVE HELMET**

(71) Applicant: Tier Mobility GmbH, 10785 Berlin (DE)
(72) Inventor: Wilrich, Matthias, 10963 Berlin (DE)
(74) Representative: Zimmermann & Partner Patentanwälte mbB

(57) **Abstract**

A lockable storage device (10) for a foldable protective helmet (30), wherein the lockable storage device has a closed and an open configuration and a cavity for receiving a foldable protective helmet (30), wherein the storage device (10) is configured to be attached to a scooter (1), wherein the storage device comprises an electrical lock mechanism (23) configured to lock the storage device (10) in the closed configuration and configured to be electrically connected to a controller, wherein the electrical lock mechanism (23) unlocks the storage device (10) if an electrical signal to unlock is received from the controller.

## Description

### TECHNICAL FIELD

Embodiments of the present disclosure relate generally to personal mobility vehicles, such as electric scooters, and corresponding protective helmets.

### BACKGROUND

Scooters are wheeled devices used for individual transportation. A conventional scooter has a running board on which the user stands. The running board is supported by at least two wheels, one at the front and one at the rear. The front wheel may be steerable by means of a handle bar, which is connected to the front wheel through a steering shaft. The scooter is typically operated by holding the handle bar with two hands, placing one foot on the running board, and pushing with the other foot to propel the scooter.

Recently, motorized scooters also known as electric scooters or e-scooters have become available. In these types of devices, the motor is usually attached to the rear wheel of the scooter. An e-scooter may be used similar to a conventional scooter during the kick-off phase. The motor may start driving the wheel or wheels after a certain minimum speed is reached.

A user is required to wear a helmet for many activities such as cycling and motorcycling, or if he is not required, at least it is strongly recommended. Document US 2012/0216338 A1 discloses come examples of foldable protective helmets.

Scooters are often provided by a company in public areas and users can book scooters for individual transportation. However, a helmet is often not available which causes a risk for users.

### SUMMARY

In light of the above, a storage device for a foldable protective helmet, a scooter, a system and a method are suggested. Further aspects, advantages, and features are apparent from the dependent claims, the description, and the accompanying drawings.

A lockable storage device for a foldable protective helmet is suggested. The storage device has a closed and an open configuration and a cavity for receiving a foldable protective helmet, wherein the storage device is configured to be attached to a scooter, wherein the storage device comprises an electrical lock mechanism configured to lock the storage device in the closed configuration and configured to be electrically connected to a controller, wherein the electrical lock mechanism unlocks the storage device if an electrical signal to unlock is received from the controller.

A system can comprise an e-scooter comprising a support surface configured to support a user, at least a first and a second wheel, a steering shaft connected to at least one wheel for steering the scooter, a power supply and an electric motor, wherein the power supply supplies power to the motor and at least one wheel can be driven by the motor; and a storage device for receiving a foldable protective helmet, wherein the storage device is attached to the e-scooter; and a foldable protective helmet received within the storage device.

A method associated with the storage device and the system is also suggested. The method for operating an e-scooter comprises: - providing an e-scooter comprising: a support surface configured to support a user, at least a first and a second wheel, a steering shaft connected to at least one wheel for steering the scooter, a power supply, an electric motor, wherein the power supply supplies power to the motor and at least one wheel which can be driven by the motor, a controller, a lockable storage device for receiving a foldable protective helmet, wherein the storage device is attached to the e-scooter; - providing a folded protective helmet received within the storage device; - receiving a booking request sent by a mobile device of a user; - validating the booking request; - sending a signal to the controller upon which the controller unlocks the storage device.

The storage device, the scooter, the system and the method correspond with each other. Some details described herein which relate to one of them may be also applicable to the other.

The storage device, the scooter, the system and the method of the present disclosure improve the safety of a user by providing the possibility to store a foldable helmet directly at the scooter.

It should be understood that a protective helmet in the sense of the present disclosure is a helmet designed to attenuate impacts to the head of a user in falls or collisions. There has been an active debate over decades whether the use of protective helmets by cyclists should be promoted or mandated. The same debate is starting with regard to the use of e-scooters or scooters in general.

### BRIEF DESCRIPTION OF THE DRAWINGS

These and other features, aspects, and advantages are described below with reference to drawings of an example embodiment, which are intended to illustrate, but not to limit, the present disclosure
- Fig. 1: shows a scooter with a storage device;
- Fig. 2: shows a portion of a storage device;
- Fig. 3: shows an exploded view of a storage device;
- Fig. 4: shows a storage device in an open position attached to a steering shaft;
- Fig. 5: shows a storage device in an open position attached to a steering shaft with a folded helmet; and
- Fig. 6: shows foldable helmets of prior art document US 2012/0216338 A1.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components.

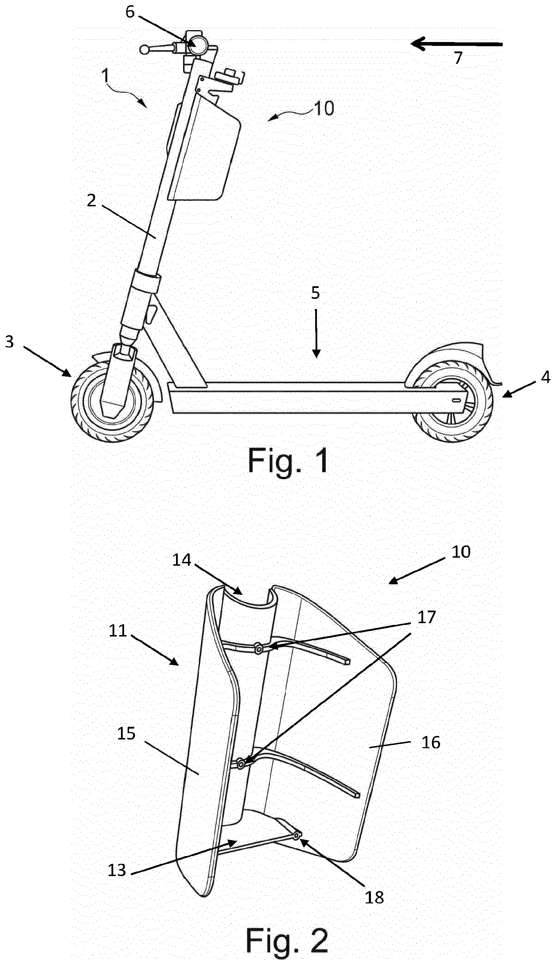

With exemplary reference to Fig. 1, a scooter 1 comprises a support surface 5 configured to support a user, at least a first and a second wheel 3, 4, and a steering shaft 2 connected to at least one wheel 3, 4 for steering the scooter 1. The scooter 1 can be an electronic scooter (e-scooter) and can further comprise a power supply and an electric motor, wherein the power supply supplies power to the motor and wherein at least one wheel 3, 4 can be driven by the motor. The power supply can be a battery.

In some embodiments, the e-scooter 1 has a running board and the support surface 5 is the surface of a running board. The running board can house the power supply in some embodiments. The wheels 3, 4 can comprise only two wheels - a front wheel 3 and a rear wheel 4 - as shown in Fig. 1. The front wheel 3 can be disposed on a first end of the running board and the second wheel can be disposed on a second end of the running board opposite the first end. The front wheel is connected to the steering shaft 2.

The scooter can have further features like, for example, one or more brakes, front and/or rear lights, and one or more suspensions at the wheels.

As shown in the embodiment of Fig. 1, the storage device 10 is attached to the scooter 1. Storage device 10 can be configured to be attached to the steering shaft 2 of the scooter 1. Usually the space around the steering shaft 2 is free space. The storage device 10 can be attached to the steering shaft 2 without influencing the usability for a user standing on the support surface 5 and driving the scooter.

The scooter has a driving direction 7 which is in Fig. 1 from right to left. The storage device 10 can be attached to the steering shaft 2 on one side facing on opposite direction of the driving direction 7. In other words, storage device 10 can extend from the steering shaft 2 in the opposite direction of the driving direction 7. However, in some alternative embodiments, storage device 10 can also face the driving direction 7. The direction of storage device 10 can be dependent of the angle of the steering shaft 2. During rotation of the steering shaft 2, the storage device 10 rotates either on the outside or the inside of a tilt rotation center dependent from the position on which it is attached to the steering device. Positioning the storage device 10 on the side facing on opposite direction of the driving direction 7 is in particular useful, if an angle of the steering shaft 2 has a tilt between 8° and 15°.

In some embodiment, the storage device 10 can be positioned in an upper portion of the steering shaft 2 close to a handle bar 6. In other words, the steering shaft 2 has a first and a second end, wherein the first end is attached to a handle or handle bar 6 and the second end is attached to a wheel 3, wherein the storage device 10 is attached to the steering shaft 2 closer to the first end than to the second end.

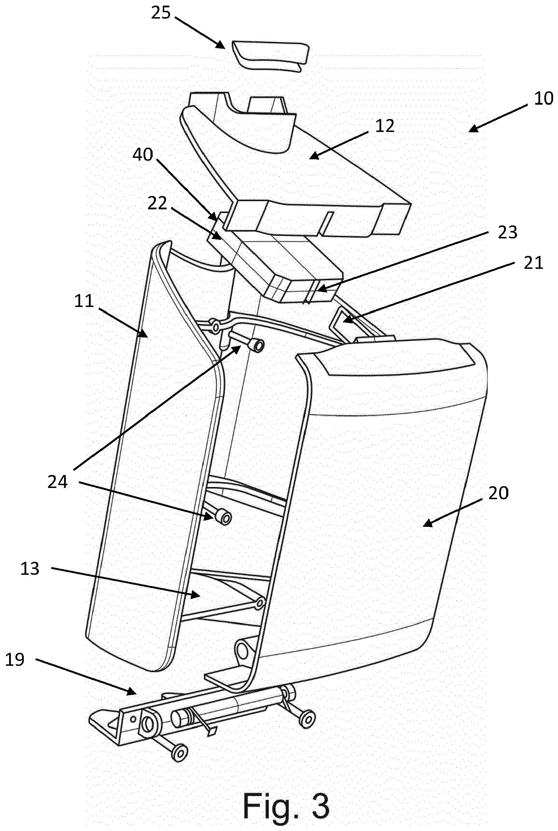

Figs. 2 and 3 show an embodiment of the storage device 10. The storage device 10 comprises a body 11 configured to be attached to a steering shaft 2 of a scooter 1, a cover 20 connected to the body 11 via a closing assembly 19, wherein the body 11 and the cover 20 form a cavity suitable for receiving a folded protective helmet 30, wherein the cover 20 is moveable relative to the body and has an open position and a closed position. The storage device 10 further comprises a electrical lock mechanism 23 configured to lock the cover in the closed position, wherein the lock mechanism 23 is configured to be electrically connected to a controller, wherein the electrical lock mechanism 23 unlocks the cover 20 if an electrical signal to unlock is received from the controller.

Figs. 2 and 3 show an embodiment of the body 11. The body 11 can have a first and a second side portion 15, 16 having a distance between each other and creating a space between each other. A cavity can be formed by the first and a second side portion 15, 16, a top portion 12, a bottom portion 13 and the cover 20. First and a second side portion 15, 16 can be connected to each other or can be formed out of a unitary structure as shown in the embodiment of Fig. 2. However in some alternative embodiments, side portions can be also part of the cover 20 and move with the cover 20 from the closed to the open position. Cover 20 can function as a door to the cavity as shown in Figs. 2 and 3.

Body 11 is configured to be attached to a steering shaft 2 of a scooter 1. In some embodiments, body 11 has a recess 14 configured to receive a portion of steering shaft 2 the scooter as shown in Figs. 2 and 3. The recess 14 can be form fitted to the steering shaft 2. For example, the steering shaft is cylindrical at a portion where the body should be attached and the recess fits the cylindrical shape. Cylindrical can include cylinders with an elliptical or round ground surface.

The body 11 can have a front portion configured to be attached to a steering shaft 2 of a scooter 1, wherein the cover 20 is located opposite to the front portion. Specifically, the recess can form the front portion. First and second side portion 15, 16 can have a distance between each other, wherein the distance between the side portions increases from the front portion towards the cover 20. This creates a cavity which increases in width. Specifically, this shape is advantageous if the folded helmet also increases in width in one direction. For example, the helmet can be folded at one line and the width of the helmet can increase with distance from the folded line. Furthermore, typically, the steering shaft 2 has a smaller diameter than the folded helmet.

Body 11 can be attached to steering shaft 2 with a fastener assembly. Fastener assembly can include, for example, holes 17 in the body, specifically in the recess, and screws 24 which are inserted into holes 17 and which can be screwed into the steering shaft 2. The fastener assembly can be part of the scooter or the system described herein.

In some embodiments, body 11 has a recess configured to receive a portion of steering shaft 2 the scooter 1. Specifically, the recess is shaped to fit on at least a portion of a cylindrical shaft 2.

The cover 20 is connected to the body 11 via a closing assembly 19. In some embodiments, closing assembly 19 includes a hinge. The cover 20 and the body 11 are attached to the hinge and the cover 20 opens as a hatch.

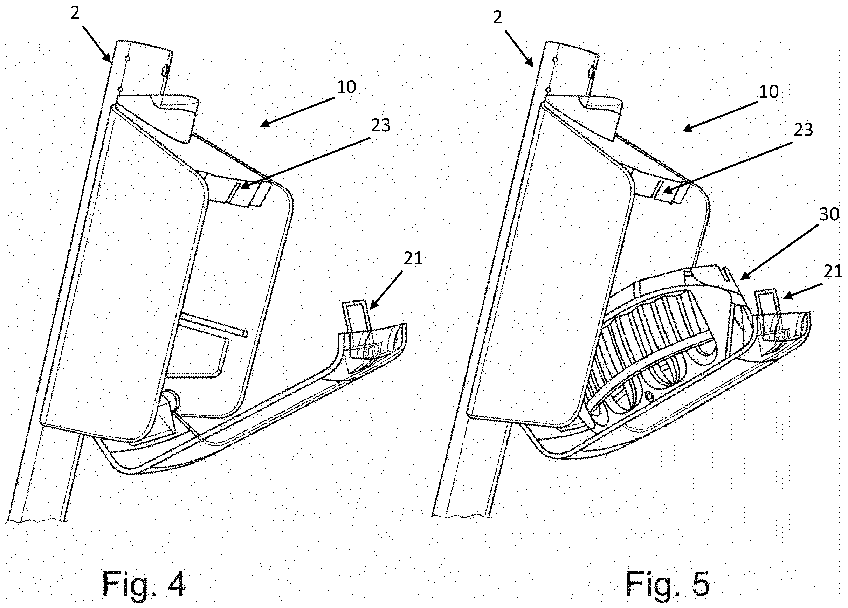

The cover 20 can be attached to the body 11 at the bottom of the cover 20, so that the cover 20 rotates at the closing assembly 19 and opens at the top. This prevents a helmet 30 which is in the cavity to fall out of the cavity if the cover 20 is opened. Figs. 4 and 5 show a cover 20 and a body wherein the closing assembly 19 attaches the cover 20 to the body at the bottom portion 13 and at the bottom of the cover 20 with a hinge. The closing assembly 19 may be attached to the body 11 with a fastener, for example screws, and corresponding holes 18. Fig. 5 shows a storage device 10 in the open position with a folded helmet 30.

Fig. 4 shows an embodiment in which the closing assembly 19 comprises a spring. The spring can be attached to the hinge. The spring is configured to move the cover 20 to the closed position which holds the storage device 10 closed until a user manually opens the cover 20. This prevents the cover 20 from opening uncontrolled when the locking mechanism 23 is unlocked.

The closing assembly 19 can be attached to the body 11 and/or the cover 20 by a fastener, for example, screws, which is also illustrated in Fig. 3.

The storage device 10 can comprises an electrical lock mechanism 23 configured to lock the cover 20 in the closed position. In general, the storage device 10 has a closed and an open configuration and is configured for receiving a foldable protective helmet 30. The foldable protective helmet 30 received within the storage device 10 can be removed in the open configuration of the storage device 10 which corresponds to the open position of the cover 20. The electrical lock mechanism 23 is configured to lock the storage device 10 in the closed configuration. In particular, electrical lock mechanism 23 is configured to lock the cover 20 in the closed position.

The electrical lock mechanism 23 can comprise a lock located at the body 11 and a corresponding hook 21 located at the cover 20 as shown in Fig 3. However, there are other alternatives, for example, the electrical lock mechanism 23 can be integrated in the closing assembly 19 and blocking the closing assembly 19 if the storage device 10 is locked. The electrical lock mechanism 23 can include an internal power supply which provides power to unlock the lock.

In some embodiments, the storage device 10 comprising a helmet detection device 22 configured for sensing if a helmet 30 is located inside the cavity or not. The helmet detection device can be, for example, an RFID sensor wherein the helmet has an RFID chip. The helmet detection device 22 can be connected to the controller 40.

The storage device 10 can comprise a controller 40 configured to send an electrical signal to unlock to the electrical lock mechanism 23. Controller can be part of the storage device 10 or can be a part of the scooter 1. In some embodiments, controller 40 is the same controller which controls the electric motor of the e-scooter. Controller 40 can also be connected to a helmet detection device 22. In some embodiments, controller 40 is a CPU board.

The power supply of the scooter can be connected to the electrical lock mechanism 23, the controller 40 and/or helmet detection device 22. In some other embodiments, electrical lock mechanism 23, the controller 40 and helmet detection device have separate power supplies / batteries to ensure they do not run out of power if the scooter is driven. Electrical lock mechanism 23, controller 40 and/or helmet detection device 22 may be housed in one housing as shown in Fig. 3.

In some embodiments, storage device 10 comprises an LED light source 25. The LED light source 25 is externally visible for users and can indicate if the helmet is located in the storage device 10. Alternatively or additionally, LED light source 25 can indicate the battery level of the power supply and/or if the scooter is available for a booking or not. The LED light source 25 can be located at the top of the storage device 10. However, in other embodiments, LED light source 25 is not a part of the storage device 10 but directly attached to the scooter 1 and connected to the storage device 10.

In some further embodiments, controller 40 is connected to a communication device to communicate with a server. The controller 40 can receive, via the communication device, a signal from the server upon which the controller 40 unlocks the storage device 10. Specifically, the communication device communicates with the server via the internet. In some embodiments, the communication device can include a blue tooth communication and/or internet communication. In some further embodiment, scooter 1 has a GPS receiver and provides its position calculated with the GPS receiver to a server via the communication device.

In some further embodiments of the disclosure, a method for operating an e-scooter is described. Specifically the method can be a method for operating a rental service for shared individual transportation devices. The method comprises: - providing an e-scooter comprising: a support surface configured to support a user, at least a first and a second wheel, a steering shaft connected to at least one wheel for steering the scooter, a power supply, an electric motor, wherein the power supply supplies power to the motor and at least one wheel which can be driven by the motor, a controller, a lockable storage device for receiving a foldable protective helmet, wherein the storage device is attached to the e-scooter; - providing a folded protective helmet received within the storage device; - receiving a booking request sent by a mobile device of a user; - validating the booking request; - sending a signal to the controller upon which the controller unlocks the storage device. The e-scooter and the lockable storage device can be any scooter 1 and any storage device 10 disclosed herein.

The e-scooter 1 can be provided with a lockable storage device 10 for receiving a foldable protective helmet 30 having a closed and an open configuration, wherein the storage device 10 is locked in the closed configuration. Specifically, a cover of the lockable storage device 10 can be locked in a closed position.

In some embodiments, electrical lock mechanism 23 is configured to automatically lock the storage device 10 in the closed configuration if the storage device 10 is moved from its open configuration to its closed configuration. In some embodiments, electrical lock mechanism 23 is configured to automatically lock the cover in the closed position if the cover is moved from the open position to the closed position. Accordingly the method can comprise: - automatically lock the storage device 10 in the closed configuration if the storage device 10 is moved from its open configuration to its closed configuration.

The method can further comprise: - detecting if the helmet is received within the storage device, specifically via a helmet detection device; - blocking the e-scooter, if the helmet is received in the storage device.. It may be required, for example, by national law that wearing the helmet is not only promoted but mandated. Therefore, the scooter can be blocked, for example, by activating a brake, blocking power supply of the motor, blocking the motor and/or blocking a wheel, if the helmet is received within the storage device and, therefore, not worn by a user.

In another embodiment, the method further comprises: - receiving a request to terminate the booking; - detecting if the helmet is received within the storage device; - accepting the termination if the helmet is received in the storage device, or not accepting the termination of the helmet is not received in the storage device. The booking of the user may be terminated only if the helmet is received within the storage device. This ensures that the helmet cannot be stolen by user. In some example, accepting the termination includes accepting the termination if the helmet is received in the storage device and the storage device is locked in the closed configuration, or not accepting the termination if the helmet is not received in the storage device or if the storage device is not locked in the closed configuration.

Receiving a booking request sent by a mobile device of a user can include receiving a booking request via the internet by a server. The scooter has a connection to a server and is externally activated or deactivated. Validating the booking request can include validating the booking request by the server, wherein sending a signal to the controller upon which the controller unlocks the storage device includes sending a signal via the internet to the controller upon which the controller unlocks the storage device. A mobile device is typically a smart phone or tablet device. Connection to the server via the internet can be provided with a software application (app) on the mobile device.

In some examples the e-scooter is blocked until a booking request is validated. After validating the booking request, the e-scooter can be unblocked. The validation of the booking may unblock the e-scooter and trigger the signal to the controller upon which the controller unlocks the storage device. However, in some alternatives, the signal to the controller upon which the controller unlocks the storage device may not be coupled to the unblocking of the e-scooter. For example, a user may decide to book the helmet additionally to the e-scooter. Accordingly, a booking request may contain - additionally to the booking of the e-scooter - a booking of the helmet. If the helmet is booked, a signal to the controller upon which the controller unlocks the storage device is sent, if the helmet is not booked, the signal is not sent.

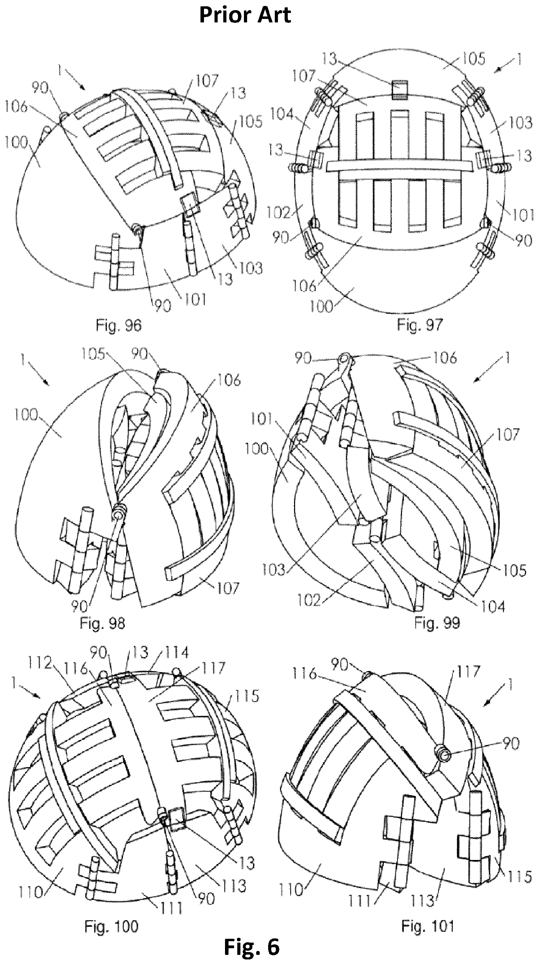

Fig. 6 shows some examples of a foldable protective helmet of prior art document US 2012/0216338 A1 by Overade (c). The protective helmet comprises a plurality of segments, connected to each other by means of a sliding, rotation means or by hinges. Upon folding, the helmet decreases in size. Reference signs in Fig. 6 are original reference sign of document US 2012/0216338 A1 and do not correspond with the reference signs of the present disclosure.

In some embodiments, the foldable protective helmet comprises a plurality of rigid segments connected to each other by any combination of means of a sliding, rotation means and hinges. The helmet may be characterizes as a hard shell helmet or micro shell helmet. These helmets differ from soft shell helmets, because soft shell helmets do not provide sufficient protection.

Protective helmets of the present disclosure can be helmets which fall under the European Norm DIN EN 1078 (2012) - "Helmets for pedal cyclists and for users of skateboards and roller skates*".*

The helmet has a folded and an unfolded configuration. In unfolded configuration, it has a size sufficient to cover the top of a user's head and protect it from impacts. In some examples, the helmet can have a mass between 0.4 kg and 0.6 kg. In the folded configuration, the helmet can have a size of, for example, 21x11x16cm.

In some embodiments, the cavity has at least a size to receive a folded helmet having a length in one dimension of 20 cm. The width of the cavity can be limited in one dimension to, for example, 12 cm. Or in other word, a folded helmet that is smaller than 12 cm in one dimensions can be placed inside the cavity. The other dimensions may be smaller than, for example, 22 cm and 18 cm. The storage device may be attached to the steering shaft in that the largest dimension of the storage device is aligned along the steering shaft.

### REFERENCE NUMBERS

- 1: scooter
- 2: steering shaft
- 3: front wheel
- 4: rear wheel
- 5: support surface
- 6: handle bar
- 7: driving direction

- 10: storage device
- 11: body
- 12: top portion
- 13: bottom portion
- 14: recess
- 15: first side portion
- 16: second side portion
- 17: hole
- 18: hole
- 19: closing assembly
- 20: cover
- 21: hook
- 22: detection device
- 23: electrical lock mechanism
- 24: screw
- 25: LED light source

- 30: helmet

- 40: controller

## Claims

1. A lockable storage device (10) for a foldable protective helmet (30), wherein the lockable storage device has a closed and an open configuration and a cavity for receiving a foldable protective helmet (30), wherein the storage device (10) is configured to be attached to a scooter (1), wherein the storage device comprises an electrical lock mechanism (23) configured to lock the storage device (10) in the closed configuration and configured to be electrically connected to a controller, wherein the electrical lock mechanism (23) unlocks the storage device (10) if an electrical signal to unlock is received from the controller.

2. The lockable storage device (10) of claim 1, wherein the storage device (10) comprises a body (11) configured to be attached to a steering shaft (2) of a scooter (1) and a cover (20) connected to the body (11) via a closing assembly (19), wherein the body (11) and the cover (20) form the cavity for receiving the folded protective helmet (30) and wherein the cover (20) is moveable relative to the body (11) and has an open position and a closed position.

3. The storage device according to any preceding claims, further comprising a helmet detection device configured for sensing if a helmet (30) is located inside the cavity or not.

4. The storage device according to any preceding claims, further comprising a controller (40) configured to send an electrical signal to unlock to the electrical lock mechanism (23).

5. A scooter, comprising
a support surface (5) configured to support a user,
at least a first and a second wheel (3, 4),
a steering shaft (2) connected to at least one wheel (3, 4) for steering the scooter, and
a storage device (10) according to any of the preceding claims, wherein the storage device (10) is attached to the scooter, specifically to the steering shaft (2).

6. The scooter according to claim 5, wherein the scooter (1) has a driving direction (7) and, wherein the storage device (10) extends from the steering shaft (2) in the opposite direction of the driving direction.

7. The scooter according to any of claims 5 or 6, wherein the steering shaft (2) has a first and a second end, wherein the first end is attached to a handle (3) and the second end is attached to a wheel (3), wherein the storage device (10) is attached to the steering shaft (2) closer to the first end than to the second end.

8. The scooter according to any of claims 5 to 7, wherein the scooter (1) is an e-scooter and comprises a power supply and an electric motor, wherein the power supply supplies power to the motor and wherein at least one wheel can be driven by the motor.

9. A system comprising:
an e-scooter (1) comprising a support surface (5) configured to support a user, at least a first and a second wheel (3, 4), a steering shaft (2) connected to at least one wheel (3) for steering the e-scooter (1), a power supply and an electric motor, wherein the power supply supplies power to the motor and at least one wheel can be driven by the motor; and
a storage device (10) having a closed and an open configuration and being configured for receiving a foldable protective helmet (30), wherein the storage device (10) is attached to the e-scooter (1); and
a foldable protective helmet (30) received within the storage device (10).

10. The system according to claim 9, wherein the storage device (10) is attached to the steering shaft (2) of the e-scooter (1).

11. The system according to any of claim 9 or 10, wherein the storage device is lockable and (10) comprises an electrical lock mechanism (23) configured to lock the storage device (10) in the closed configuration, wherein the lock mechanism (23) is configured to be electrically connected to a controller, wherein the electrical lock mechanism (23) unlocks the storage device (10) if an electrical signal to unlock is received from the controller (23).

12. A method for operating an e-scooter, comprising:
- providing an e-scooter comprising: a support surface configured to support a user, at least a first and a second wheel, a steering shaft connected to at least one wheel for steering the scooter, a power supply, an electric motor, wherein the power supply supplies power to the motor and at least one wheel which can be driven by the motor, a controller, a lockable storage device for receiving a foldable protective helmet, wherein the storage device is attached to the e-scooter;
- providing a folded protective helmet received within the storage device;
- receiving a booking request send by a mobile device of a user;
- validating the booking request;
- sending a signal to the controller upon which the controller unlocks the storage device.

13. The method of claim 12, further comprising:
- detecting if the helmet is received within the storage device;
- blocking the e-scooter, if the helmet is received in the storage device.

14. The method of any of claim 12 or 14, further comprising:
- receiving a request to terminate the booking;
- detecting if the helmet is received within the storage device;
- accepting the termination if the helmet is received in the storage device, or not accepting the termination of the helmet is not received in the storage device.

15. The method of any of claim 12 to 14, wherein receiving a booking request send by a mobile device of a user includes receiving a booking request via the internet by a server,
wherein validating the booking request includes validating the booking request by the server, and
wherein sending a signal to the controller upon which the controller unlocks the storage device includes sending a signal via the internet to the controller upon which the controller unlocks the storage device.
